# EUROPEAN PATENT APPLICATION

(11) **EP 4 149 197 A1**
(43) Date of publication of application: **15.03.2023**
(21) Application number: 21817876.2
(22) Date of filing: 31.05.2021
(51) Int. Cl.: H04W 74/00, H04W 74/04, H04W 84/12

(54) **LINK SELECTION METHOD AND APPARATUS, AND COMPUTER READABLE STORAGE MEDIUM**

(30) Priority: 05.06.2020 CN 202010505315
(71) Applicant: Huawei Technologies Co., Ltd., Longgang District, Shenzhen, Guangdong 518129 (CN)
(72) Inventor: WANG, Yungui, Shenzhen, Guangdong 518129 (CN)
(74) Representative: Goddar, Heinz J.
(86) International application number: PCT/CN2021/097435
(87) International publication number: WO 2021/244490

(57) **Abstract**

A link selection method and apparatus, and a computer-readable storage medium are disclosed. A STA sends a link selection indication to an AP. The STA is associated with the AP, and there are a plurality of links between the STA and the AP. The plurality of links are separately on a plurality of different channels. The link selection indication indicates a target link corresponding to a target service type. The target link includes at least one of the plurality of links. In this application, the STA can select, for different service types, a proper link from the plurality of links for transmission of corresponding service data, so that different QoS guarantees are obtained for services of different service types, increasing service running reliability in a WLAN.

## Description

This application claims priority to Chinese Patent Application No. 202010505315.7, filed on June 5, 2020 and entitled "LINK SELECTION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a link selection method and apparatus, and a computer-readable storage medium.

### BACKGROUND

A wireless local area network (wireless local area network, WLAN) includes an access point (access point, AP) and a station (station, STA). The AP is a bridge between the WLAN and another type of network (for example, a wired network). The STA is a wireless terminal configured with a WLAN access function, for example, a smartphone or a laptop.

Currently, if there are a plurality of links between the AP and the STA, how to select a proper link from the plurality of links between the AP and the STA for transmission of service data is a problem to be resolved.

### SUMMARY

This application provides a link selection method and apparatus, and a computer-readable storage medium.

According to a first aspect, a link selection method is provided, and is applied to a wireless local area network. The method includes: A STA sends a link selection indication to an AP. The STA is associated with the AP, and there are a plurality of links between the STA and the AP. The plurality of links are separately on a plurality of different channels. The ink selection indication indicates a target link corresponding to a target service type. The target link includes at least one of the plurality of links.

In this application, the STA can select, for different service types, a proper link from the plurality of links for transmission of corresponding service data, so that different QoS guarantees are obtained for services of different service types, increasing service running reliability in a WLAN.

Optionally, after sending the link selection indication to the AP, the STA receives, on the target link, a scheduling frame sent by the AP. Subsequently, the STA sends, on the target link, service data of the target service type to the AP based on the scheduling frame.

In this application, the AP schedules a service of a corresponding service type on the link selected by the STA, so that different QoS guarantees are obtained for services of different service types, increasing service running reliability in the WLAN.

Optionally, the scheduling frame includes an indication to the target service type.

Optionally, the STA receives a link selection request sent by the AP, where the link selection request requests the STA to send the link selection indication.

In this application, the STA passively performs link selection as triggered by the link selection request sent by the AP.

Optionally, the link selection request includes a service type identity of the target service type and/or a link identity of a recommended link.

In this application, the service type identity of the target service type is included in the link selection request, so that the AP triggers the STA to perform link selection for the target service type. The link identity of the recommended link is included in the link selection request, to indicate the STA to perform link selection on the recommended link or preferentially select the recommended link. This can improve link selection reliability, and further improve reliability of sending service data by the STA to the AP.

Optionally, the link selection request is in a buffer status report poll (buffer status report poll, BSRP) frame sent by the AP to the STA.

In this application, the link selection request is included in the BSRP frame, that is, the BSRP frame is reused without separately sending the link selection request. This saves transmission resources.

Optionally, the link selection indication is in a buffer status report (buffer status report, BSR) field sent by the STA to the AP.

In this application, the link selection indication is included in the BSR field, that is, the BSR field is reused without separately sending the link selection indication. This saves transmission resources.

Optionally, the target link is determined based on link quality information of the plurality of links and the target service type, and the link quality information includes at least one of a bandwidth, a transmission delay, or a packet loss rate.

According to a second aspect, a link selection method is provided, and is applied to a wireless local area network. The method includes: An AP receives a link selection indication sent by a STA. The STA is associated with the AP. There are a plurality of links between the STA and the AP. The plurality of links are separately on a plurality of different channels. The link selection indication indicates a target link corresponding to a target service type. The target link includes at least one of the plurality of links.

Optionally, after receiving the link selection indication sent by the STA, the AP sends, on the target link, a scheduling frame to the STA.

Optionally, the scheduling frame includes an indication to the target service type.

Optionally, the AP sends a link selection request to the STA, where the link selection request requests the STA to send the link selection indication.

Optionally, the link selection request includes a service type identity of the target service type and/or a link identity of a recommended link.

Optionally, the link selection request is in a BSRP frame sent by the AP to the STA.

Optionally, the link selection indication is in a BSR field sent by the STA to the AP.

According to a third aspect, a link selection apparatus is provided. The apparatus includes a plurality of functional modules. The plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided based on specific implementation.

According to a fourth aspect, a link selection apparatus is provided. The apparatus includes a plurality of functional modules. The plurality of functional modules interact with each other to implement the method in the second aspect and the implementations of the second aspect. The plurality of functional modules may be implemented based on software, hardware, or a combination of software and hardware, and the plurality of functional modules may be randomly combined or divided based on specific implementation.

According to a fifth aspect, a STA is provided, including a processor and a transceiver. The transceiver operates on a plurality of different channels.

The transceiver is configured to perform receiving and sending actions on one or more channels under control of the processor, to implement the link selection method according to any implementation of the first aspect.

Optionally, the transceiver includes a plurality of radio frequency circuits, and the plurality of radio frequency circuits separately operate on the plurality of different channels.

According to a sixth aspect, an AP is provided, including a processor and a transceiver. The transceiver operates on a plurality of different channels.

The transceiver is configured to perform receiving and sending actions on one or more channels under control of the processor, to implement the link selection method according to any implementation of the second aspect.

Optionally, the transceiver includes a plurality of radio frequency circuits, and the plurality of radio frequency circuits separately operate on the plurality of different channels.

According to a seventh aspect, a computer-readable storage medium is provided. The computer-readable storage medium stores instructions. When the instructions are executed by a processor of a computer device, the link selection method according to the first aspect or the second aspect is implemented.

According to an eighth aspect, a WLAN is provided, including a STA and an AP. The STA is associated with the AP. There are a plurality of links between the STA and the AP. The plurality of links are separately on a plurality of different channels. The STA includes the link selection apparatus according to the third aspect or is the STA according to the fifth aspect. The AP includes the link selection apparatus according to the fourth aspect or is the AP according to the sixth aspect.

According to a ninth aspect, a chip is provided. The chip includes a programmable logic circuit and/or program instructions. When the chip runs, the method in the first aspect and the implementations of the first aspect or the second aspect and the implementations of the second aspect is implemented.

Beneficial effects brought by the technical solutions provided in this application include at least the following.

In this application, there are a plurality of links between the STA and the AP. The STA can select, for different service types, a proper link from the plurality of links for transmission of corresponding service data, and then the AP schedules a service of a corresponding service type on the link selected by the STA. In this way, different QoS guarantees are obtained for services of different service types, increasing service running reliability in a WLAN. In addition, the service type identity of the target service type is included in the link selection request sent by the AP to the STA, so that the AP triggers the STA to perform link selection for the target service type. The link identity of the recommended link is included in the link selection request, to indicate the STA to perform link selection on the recommended link or preferentially select the recommended link. This can improve link selection reliability, and further improve reliability of sending service data by the STA to the AP.

### BRIEF DESCRIPTION OF DRAWINGS

FIG. 1 is a schematic diagram of a structure of a WLAN according to an embodiment of this application;
FIG. 2 is a schematic diagram of a connection between an AP and a STA according to an embodiment of this application;
FIG. 3 is a schematic flowchart of a link selection method according to an embodiment of this application;
FIG. 4 is a schematic diagram of a structure of a trigger frame defined in the IEEE 802.11ax draft;
FIG. 5 is a schematic diagram of a structure of a trigger dependent common info field according to an embodiment of this application;
FIG. 6 is a schematic diagram of a structure of another trigger dependent common info field according to an embodiment of this application;
FIG. 7 is a schematic diagram of a TLM information field according to an embodiment of this application;
FIG. 8 is a schematic diagram of another TLM information field according to an embodiment of this application;
FIG. 9 is a schematic diagram of a structure of an extended BSR field according to an embodiment of this application;
FIG. 10 is a schematic diagram of a structure of a link selection apparatus according to an embodiment of this application;
FIG. 11 is a schematic diagram of a structure of another link selection apparatus according to an embodiment of this application; and
FIG. 12 is a block diagram of a link selection apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

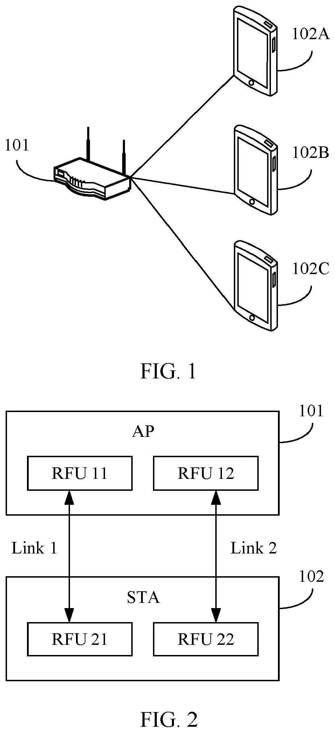

FIG. 1 is a schematic diagram of a structure of a WLAN according to an embodiment of this application. As shown in FIG. 1, the WLAN includes an AP 101 and STAs 102A to 102C (collectively referred to as STAs 102). The STA 102 is associated with the AP 101. That the STA 102 is associated with the AP 101 means that the STA 102 is wirelessly connected to the AP 101, that is, the STA 102 can wirelessly communicate with the AP 101. The AP 101 provides a WLAN protocol-based wireless access service for the STA 102. Quantities of APs and STAs in the figure are merely examples for description, and are not intended to limit a link selection system provided in embodiments of this application.

A multi-link network architecture is provided in the Institute of Electrical and Electronics Engineers (Institute of Electrical and Electronics Engineers, IEEE) 802.11be draft (which is a next-generation protocol of the IEEE 802.11ax draft). Both the AP and the STA include a plurality of radio frequency units (radio frequency unit, RFU). The radio frequency unit is an electronic component of a radio signal between transceiver devices, and may also be referred to as a radio frequency circuit or a radio frequency module. Different RFUs operate on different frequency bands or on different channels of a same frequency band. One RFU of an AP can separately establish connections to RFUs of a plurality of STAs, and one RFU of a STA can establish a connection to one RFU of an AP. Connections can be established between a plurality of RFUs of an AP and a plurality of RFUs of a STA, that is, a plurality of links can be established between the AP and the STA on a plurality of channels. In this embodiment of this application, there are a plurality of links between the AP 101 and the STA 102. The plurality of links are separately on a plurality of different channels. The channel is a complete WLAN channel, for example, a 20 megahertz (MHz) WLAN channel, or a WLAN channel with a larger bandwidth (for example, 40 MHz, 80 MHz, or 160 MHz). If the channel bandwidth is greater than 20 MHz, the channel may include a primary channel and a secondary channel.

Ranges of radio frequencies used by the WLAN are the 2.4 gigahertz (GHz) frequency band and the 5 GHz frequency band. The 2.4 GHz frequency band includes 2.4 GHz to 2.4835 GHz, and the 5 GHz frequency band includes 5.150 GHz to 5.350 GHz and 5.725 GHz to 5.850 GHz. The plurality of links between the AP 101 and the STA 102 are separately on a plurality of different channels in the 2.4 GHz frequency band and/or the 5 GHz frequency band. For example, there are two links between the AP 101 and the STA 102: one link is in the 2.4 GHz frequency band and one link in the 5 GHz frequency band; or two links in the 2.4 GHz frequency band, where one link is on a channel 1 in the 2.4 GHz frequency band, and the other link is on a channel 11 in the 2.4 GHz frequency band; or two links on different channels in the 5 GHz frequency band.

For example, FIG. 2 is a schematic diagram of a connection between an AP and a STA according to an embodiment of this application. As shown in FIG. 2, the AP 101 includes an RFU 11 operating in the 2.4 GHz frequency band and an RFU 12 operating in the 5 GHz frequency band. The STA 102 includes an RFU 21 operating in the 2.4 GHz frequency band and an RFU 22 operating in the 5 GHz frequency band. The RFU 11 in the AP 101 is connected to the RFU 21 in the STA 102, and the RFU 12 in the AP 101 is connected to the RFU 22 in the STA 102. In other words, there are a link 1 in the 2.4 GHz frequency band and a link 2 in the 5 GHz frequency band between the AP and the STA.

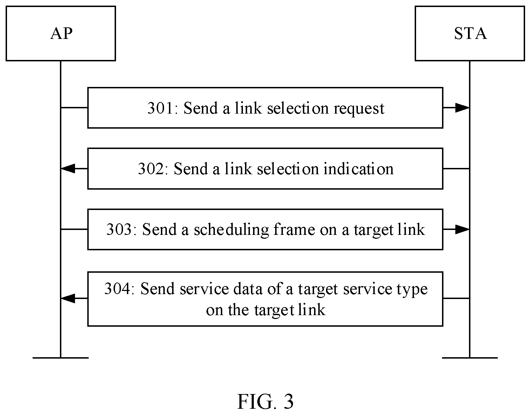

FIG. 3 is a schematic flowchart of a link selection method according to an embodiment of this application. The method is applied to the WLAN shown in FIG. 1. As shown in FIG. 3, the method includes the following steps.

Step 301: An AP sends a link selection request to a STA.

The link selection request requests the STA to send a link selection indication. Optionally, the link selection request includes a service type identity of a target service type and/or a link identity of a recommended link. When the link selection request includes the service type identity of the target service type, the link selection request requests the STA to send a link selection indication for the target service type. In other words, the link selection request requests the STA to perform link selection for the target service type. When the link selection request includes the link identity of the recommended link, the link selection request indicates the STA to perform link selection on the recommended link or preferentially select the recommended link. When the link selection request includes the service type identity of the target service type and the link identity of the recommended link, the link selection request requests the STA to perform link selection on the recommended link for transmission of service data of the target service type, or preferentially select the recommended link for transmission of service data of the target service type.

Optionally, the AP determines at least one recommended link from a plurality of links based on actual load of the plurality of links between the AP and the STA and/or a quantity of STAs associated with the plurality of links. For example, the AP may use, as the recommended link, a less busy link and/or a link associated with a smaller quantity of STAs in the plurality of links. A STA associated with a link is a STA associated with the AP over the link.

In this embodiment of this application, the AP triggers, by sending the link selection request to the STA, the STA to perform link selection. The service type identity of the target service type is included in the link selection request, so that the AP triggers the STA to perform link selection for the target service type. The link identity of the recommended link is included in the link selection request, to indicate the STA to perform link selection on the recommended link or preferentially select the recommended link. This can improve link selection reliability, and further improve reliability of sending service data by the STA to the AP.

Services in the WLAN are classified into four access categories (access category, AC) in descending order of priorities: voice (voice, VO), video (video, VI), best effort (best effort, BE), and background (back ground, BK). Each AC has two traffic identities (traffic identity, TID). That is, four ACs have eight TIDs. In a wired network, the eight TIDs correspond to eight differentiated services code point (differentiated services code point, DSCP) priorities of quality of service (quality of service, QoS). In a wireless network, the eight TIDs are used to distinguish service flow types.

Optionally, the service type identity in this embodiment of this application is denoted as TID and/or AC.

Step 302: The STA sends the link selection indication to the AP.

The link selection indication indicates a target link corresponding to the target service type. In other words, the link selection indication indicates that the STA intends to send the service data of the target service type to the AP over the target link. The target link includes at least one of the plurality of links between the STA and the AP.

Optionally, the target link is determined based on link quality information of the plurality of links between the STA and the AP and the target service type. The link quality information includes at least one of a bandwidth, a transmission delay, or a packet loss rate. The STA obtains the link quality information of the plurality of links between the STA and the AP, and then determines, from the plurality of links based on the link quality information of the plurality of links and the target service type, the target link for transmission of the service data of the target service type. Alternatively, the target link may be determined based on another factor. For example, considering that penetration of electromagnetic waves in the 2.4 GHz frequency band is stronger than that of electromagnetic waves in the 5 GHz frequency band, a channel in the 2.4 GHz frequency band may be selected for transmission of a highpriority service in the case of almost the same link quality. The following describes a manner in which the STA performs link selection for the target service type by using an example in which the link quality information includes the bandwidth and/or the transmission delay.

In a first possible implementation, the STA determines the target link from the plurality of links based on bandwidths of the plurality of links between the STA and the AP and a required bandwidth corresponding to the target service type. The required bandwidth corresponding to the service type may be determined based on a buffer size of service data of the service type in the STA. For example, a larger buffer of the service data of the service type in the STA indicates a larger required bandwidth corresponding to the service type. Optionally, the STA determines, in an average allocation manner based on the buffer size of the service data of each service type in the STA, a transmission link corresponding to each service type. There may be one or more transmission links corresponding to one service type.

For example, there are two links between the STA and the AP: a link 1 and a link 2, and a bandwidth of the link 1 is the same as a bandwidth of the link 2. The STA includes three service types: TID0, TID1, and TID2. Assuming that a sum of a required bandwidth corresponding to the TID0 and a required bandwidth corresponding to the TID 1 is equal to a required bandwidth corresponding to the TID2, the STA determines to transmit service data of the TID0 and service data of the TID1 over the link 1, and transmit service data of the TID2 over the link 2, or the STA determines to transmit service data of the TID0 and service data of the TID 1 over the link 2, and transmit service data of the TID2 over the link 1.

In this embodiment of this application, the STA determines, in the foregoing first possible implementation, the transmission link corresponding to the service type. This achieves load balancing among all the links between the STA and the AP.

In a second possible implementation, the STA determines the target link from the plurality of links based on transmission delays of the plurality of links between the STA and the AP and a service priority of the target service type. Optionally, the STA allocates a service type with a higher service priority to a link with a lower transmission delay for transmission of corresponding service data.

For example, there are two links between the STA and the AP: a link 1 and a link 2. A historical transmission delay of the link 1 is lower than a historical transmission delay of the link 2. The STA includes three service types, which are TID0, TID1, and TID2 in descending order of service priorities. Because the historical transmission delay of the link 1 is lower than the historical transmission delay of the link 2, the STA determines to transmit service data of the TID0 over the link 1, and transmit service data of the TID 1 and service data of the TID2 over the link 1 or the link 2.

In this embodiment of this application, the STA determines, in the foregoing second possible implementation, the transmission link corresponding to the service type. This ensures reliability of transmitting highpriority service data to some extent.

In a third possible implementation, the STA determines the target link from the plurality of links based on bandwidths of the plurality of links between the STA and the AP, a required bandwidth corresponding to the target service type, transmission delays of the plurality of links, and a service priority of the target service type.

With reference to the examples in the first possible implementation and the second possible implementation, the STA may determine to transmit the service data of the TID0 and the service data of the TID1 over the link 1, and transmit the service data of the TID2 over the link 2.

In this embodiment of this application, after receiving the link selection request sent by the AP, the STA may send the link selection indication to the AP. In other words, the STA passively performs link selection as triggered by the link selection request sent by the AP. Alternatively, the STA may actively perform link selection. For example, when there is to-be-transmitted service data of a new service type in the STA, the STA sends a link selection indication for the new service type to the AP. In this case, step 301 may not be performed.

Optionally, after receiving the link selection indication sent by the STA, the AP performs the following step 303.

Step 303: The AP sends, on the target link, a scheduling frame to the STA.

Optionally, the scheduling frame includes an indication to the target service type. In other words, the scheduling frame is for scheduling the STA to transmit, on the target link, the service data of the target service type to the AP. Alternatively, the scheduling frame may not include the indication to the target service type. In this case, the scheduling frame is for scheduling the STA to transmit, on the target link, all to-be-transmitted uplink service data of the STA to the AP. Optionally, when there are a plurality of target links, the AP sends, on each target link, the scheduling frame to the STA.

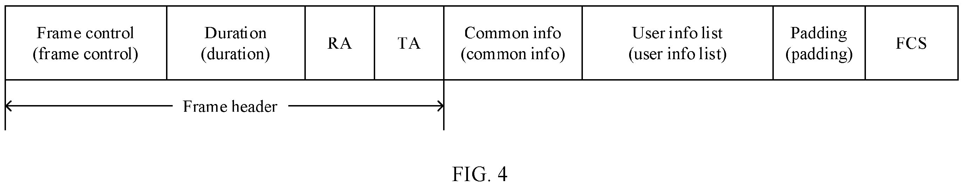

The scheduling frame may be a trigger frame (trigger frame) defined in the IEEE 802.11ax draft. FIG. 4 is a schematic diagram of a structure of the trigger frame defined in the IEEE 802.11ax draft. As shown in FIG. 4, the trigger frame includes a frame control (frame control) field, a duration (duration) field, a receiver address (receiver address, RA) field, a transmitter address (transmitter address, TA) field, a common info (common info) field, a user information list (user info list) field, a padding (padding) field (optional), a frame check sequence (Frame Check Sequence, FCS) field, and the like. The frame control field, the duration field, the RA field, and the TA field are frame headers. The common info field includes a trigger type (trigger type). Explanations of the fields in the trigger frame are not described one by one in this embodiment of this application.

As defined in the IEEE 802.11ax draft, a value range of the trigger type in the common info field is 0 to 15. Currently, trigger types with values of 0 to 7 have been defined in the IEEE 802.11ax draft, while trigger types with values of 8 to 15 have not been defined. For example, when a value of the trigger type is 0, the trigger frame is defined for triggering the STA to send an uplink physical layer protocol data unit (physical layer protocol data unit, PPDU). When the value of the trigger type is 1, the trigger frame is defined as a beamforming report poll (beamforming report poll, BFRP) frame. When the value of the trigger type is 4, the trigger frame is defined as a BSRP frame. When the value of the trigger type is 6, the trigger frame is defined as a bandwidth query report poll (bandwidth query report poll, BQRP) frame. In this embodiment of this application, the scheduling frame sent on the target link by the AP to the STA may be a trigger frame whose value of the trigger type is 0, 1, 4, or 6, or a newly defined trigger frame whose value of the trigger type is greater than 7.

Optionally, after receiving, on the target link, the scheduling frame sent by the AP, the STA performs the following step 304.

Step 304: The STA sends, on the target link, the service data of the target service type to the AP.

Optionally, after receiving the scheduling frame, the STA first determines, based on the scheduling frame, a channel resource that is on the target link and that is allocated to the STA, and then sends, on the channel resource, the service data of the target service type to the AP.

In this embodiment of this application, there are a plurality of links between the STA and the AP. The STA can select, for different service types, a proper link from the plurality of links for transmission of corresponding service data, and then the AP schedules a service of a corresponding service type on the link selected by the STA. In this way, different QoS guarantees are obtained for services of different service types, increasing service running reliability in a WLAN.

Optionally, the link selection request is in a BSRP frame sent by the AP to the STA. In this embodiment of this application, the link selection request is included in the BSRP frame, that is, the BSRP frame is reused without separately sending the link selection request. This saves transmission resources. Alternatively, the link selection request may be included in a customized trigger frame, and is separately sent by the AP to the STA. A trigger type in the customized trigger frame may be of any value from 8 to 15.

Optionally, the link selection request includes the service type identity and/or the link identity of the recommended link. The common info field of the trigger frame defined in the IEEE 802.11ax draft includes a variable (variable) trigger dependent common info (trigger dependent common info) field. In this embodiment of this application, the service type identity and/or the link identity of the recommended link may be included in a trigger dependent common info field in a common info field of the BSRP frame or the customized trigger frame. For example, when the link selection request indicates a correspondence between at least one group of service types and the recommended link, one or more mapping information (which is referred to TLM information below) fields between the service type identity and the link identity may be defined in the trigger dependent common info field.

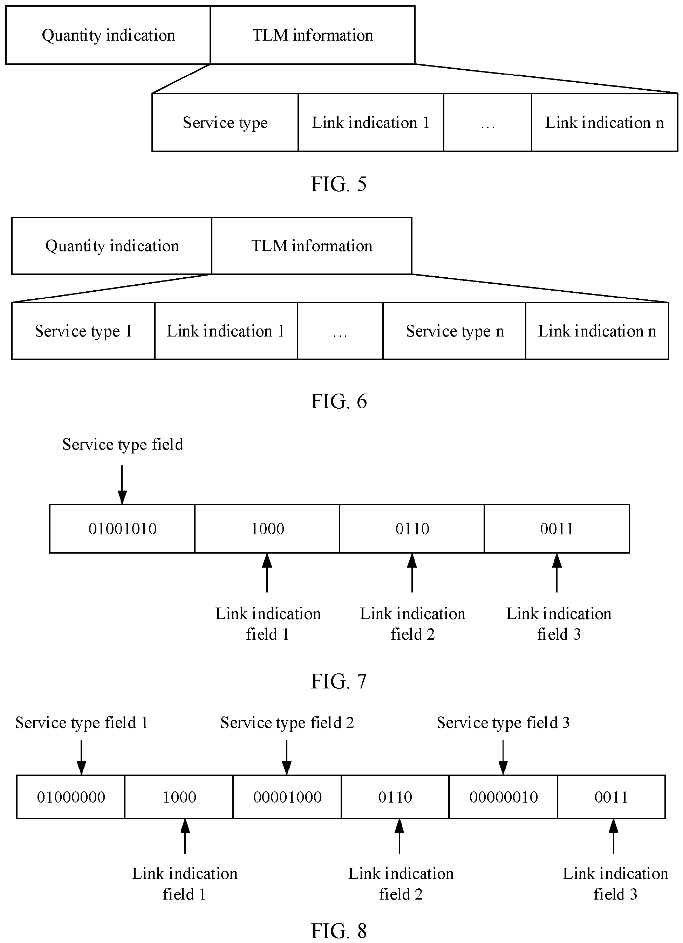

Optionally, FIG. 5 and FIG. 6 each are a schematic diagram of a structure of a trigger dependent common info field according to an embodiment of this application. As shown in FIG. 5 and FIG. 6, the trigger dependent common info field includes a quantity indication field and a TLM information field. The quantity indication field indicates a quantity of service types, in the TLM information field, for which link selection is requested. Alternatively, the trigger dependent common info field may not include the quantity indication field. The TLM information field includes a service type field and a link indication field. The service type field indicates a service type for which link selection is requested. The link indication field indicates a recommended link. A length (in bits) of the link indication field is greater than or equal to a quantity of links between the STA and the AP. Each link between the STA and the AP corresponds to one bit in the link indication field.

For example, there are four links between the STA and the AP: links 1 to 4. The length of the link indication field is 4 bits, which sequentially correspond to the links 1 to 4 from left to right. When a value of a bit is 1, it indicates that a link corresponding to the bit is the recommended link. For example, if a value of the link indication field is "0110", it indicates that the link 2 and the link 3 are recommended links; or if a value of the link indication field is "1000", it indicates that the link 1 is the recommended link.

Optionally, refer to FIG. 5. The TLM information field includes one service type field and n link indication fields. Refer to FIG. 6. The TLM information field includes n service type fields and n link indication fields. n is a quantity of service types for which link selection is requested. n is a positive integer less than or equal to a total quantity of service types.

Optionally, the service type identity is denoted as TID. A maximum value of n is 8, indicating that there are a maximum of eight service types. A length of the service type field is eight bits, and each bit corresponds to one service priority. For example, the eight bits of the service type field sequentially correspond to eight service types with service priorities of 0 to 7 from left to right. Alternatively, the service type identity is denoted as AC. A maximum value of n is 4, indicating that there are a maximum of four service types. A length of the service type field is four bits, and each bit corresponds to an access category of one priority. For example, the four bits of the service type field sequentially correspond to access categories of four priorities from left to right: BE, BK, VI, and VO.

In this embodiment of this application, it may be defined that a value of a bit in the service type field is 1, indicating that link selection is requested for a service type corresponding to the bit.

In the TLM information field shown in FIG. 5, values of one or more bits in the service type field may be 1, and a quantity of link indication fields is equal to a quantity of bits whose values are 1 in the service type field. A link indication field i from left to right corresponds to a bit i with the value of 1 from left to right in the service type field, where i is a positive integer.

For example, a length of the service type field is 8 bits. FIG. 7 is a schematic diagram of a TLM information field according to an embodiment of this application. As shown in FIG. 7, the TLM information field includes a service type field and link indication fields 1 to 3. If a value of the service type field is "01001010", it indicates that link selection is requested for service types with service priorities of 1, 4, and 6. If a value of the link indication field 1 is "1000", it indicates that a recommended link corresponding to a service type with a service priority of 1 is a link 1. If a value of the link indication field 2 is "0110", it indicates that recommended links corresponding to a service type with a service priority of 4 are a link 2 and a link 3. If a value of the link indication field 3 is "0011", it indicates that recommended links corresponding to a service type with a service priority of 6 are the link 3 or a link 4.

In the TLM information field shown in FIG. 6, a value of a bit in each service type field is 1, and the link indication field indicates a recommended link corresponding to a service type requesting for link selection, where the service type is indicated by a service type field on the left of the TLM information field.

For example, a length of the service type field is 8 bits. FIG. 8 is a schematic diagram of another TLM information field according to an embodiment of this application. As shown in FIG. 8, the TLM information field includes service type fields 1 to 3 and link indication fields 1 to 3. If a value of the service type field 1 is "01000000", it indicates that link selection is requested for a service type with a service priority of 1. If a value of the link indication field 1 is " 1000", it indicates that a recommended link corresponding to a service type with a service priority of 1 is a link 1. If a value of the service type field 2 is "00001000", it indicates that link selection is requested for a service type with a service priority of 4. If a value of the link indication field 2 is "0110", it indicates that recommended links corresponding to a service type with a service priority of 4 are a link 2 and a link 3. If a value of the service type field 3 is "00000010", it indicates that link selection is requested for a service type with a service priority of 6. If a value of the link indication field 3 is "0011", it indicates that recommended links corresponding to a service type with a service priority of 6 are the link 3 and a link 4.

In this embodiment of this application, when the AP needs to request the STA to perform link selection for a plurality of service types, the AP sends a plurality of link selection requests to the STA, where each link selection request requests the STA to perform link selection for one service type; or the AP sends one link selection request to the STA, where the link selection request requests the STA to perform link selection for a plurality of service types. A format of the link selection request may be shown in FIG. 5 or FIG. 6. Alternatively, a plurality of common info fields may be extended in a trigger frame, and a trigger dependent common info field in each common info field carries a request for performing link selection for one service type.

Optionally, the link selection indication is in a BSR field sent by the STA to the AP. The BSR field may be a field in a null frame or a data frame. In this embodiment of this application, the link selection indication is included in the BSR field, that is, the BSR field is reused without separately sending the link selection indication. This saves transmission resources.

In this embodiment of this application, the link indication field is extended in the BSR field. In combination with an access category indication (access category indication, ACI) bitmap (Bitmap) and a Delta TID (Delta TID) in the BSR field, the link indication field provides indication to link selection for the STA.

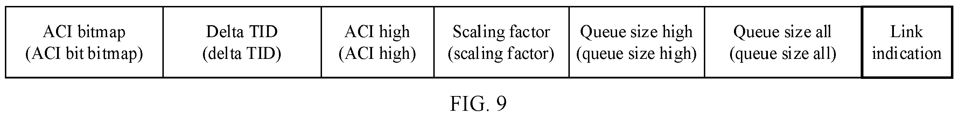

For example, FIG. 9 is a schematic diagram of a structure of an extended BSR field according to an embodiment of this application. As shown in FIG. 9, the BSR field includes an ACI bitmap field, a Delta TID field, an ACI high (ACI high) field, a scaling factor (scaling factor) field, a queue size high (queue size high) field (indicating data traffic of an AC indicated in an ACI high parameter), a queue size all (queue size all) field (indicating a data quantity of all ACs indicated in an ACI Bitmap parameter), and a link indication field. For a structure and a definition of the link indication field, refer to related descriptions of the link indication field in the TLM information field. Explanations of other fields in the BSR field are not described one by one in this embodiment of this application.

Alternatively, the link selection indication may be included in a customized frame, and is separately sent by the STA to the AP. For a format of the link selection indication in the customized frame, refer to the format of the TLM information field shown in FIG. 5 or FIG. 6. Details are not described herein in this embodiment of this application.

A sequence of steps of the link selection method provided in this embodiment of this application may be properly adjusted, or steps may be correspondingly added or deleted as required. Any variation method readily figured out by a person skilled in the art within the technical scope disclosed in this application shall fall within the protection scope of this application. Therefore, details are not described.

In conclusion, in the link selection method provided in this embodiment of this application, there are a plurality of links between the STA and the AP. The STA can select, for different service types, a proper link from the plurality of links for transmission of corresponding service data, and then the AP schedules a service of a corresponding service type on the link selected by the STA. In this way, different QoS guarantees are obtained for services of different service types, increasing service running reliability in a WLAN. In addition, the service type identity of the target service type is included in the link selection request sent by the AP to the STA, so that the AP triggers the STA to perform link selection for the target service type. The link identity of the recommended link is included in the link selection request, to indicate the STA to perform link selection on the recommended link or preferentially select the recommended link. This can improve link selection reliability, and further improve reliability of sending service data by the STA to the AP.

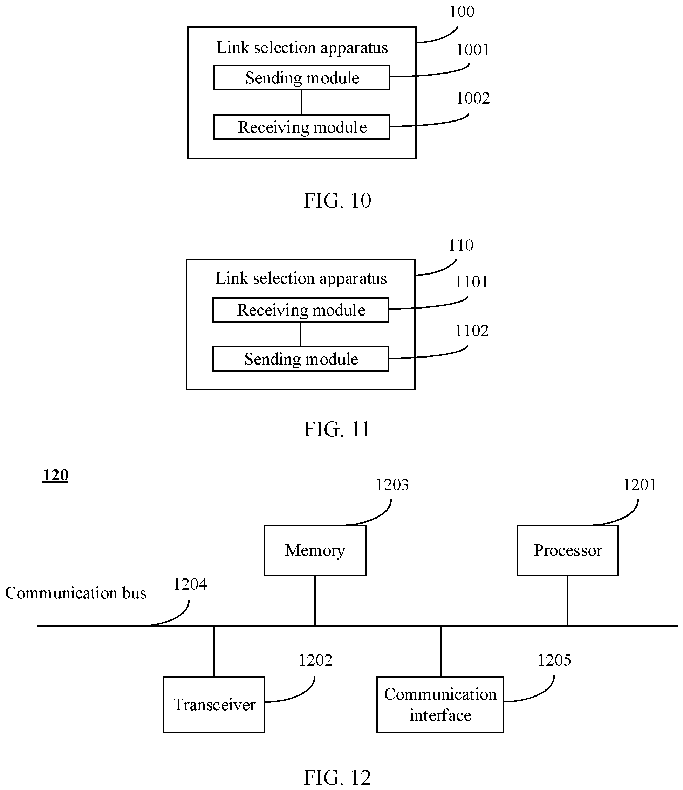

FIG. 10 is a schematic diagram of a structure of a link selection apparatus according to an embodiment of this application. The apparatus may be used in the STA 102 in the WLAN shown in FIG. 1. As shown in FIG. 10, the apparatus 100 includes:
a sending module 1001, configured to send a link selection indication to an AP, where the STA is associated with the AP, there are a plurality of links between the STA and the AP, the plurality of links are separately on a plurality of different channels, the link selection indication indicates a target link corresponding to a target service type, and the target link includes at least one of the plurality of links.

Optionally, still refer to FIG. 10. The apparatus 100 further includes a receiving module 1002.

Optionally, the receiving module 1002 is configured to receive, on the target link, a scheduling frame sent by the AP. The sending module 1001 is further configured to send, on the target link, service data of the target service type to the AP based on the scheduling frame.

Optionally, the scheduling frame includes an indication to the target service type.

Optionally, the receiving module 1002 is configured to receive a link selection request sent by the AP, where the link selection request requests the STA to send the link selection indication.

Optionally, the link selection request includes a service type identity of the target service type and/or a link identity of a recommended link.

Optionally, the link selection request is in a BSRP frame sent by the AP to the STA.

Optionally, the link selection indication is in a BSR field sent by the STA to the AP.

Optionally, the target link is determined based on link quality information of the plurality of links and the target service type, and the link quality information includes at least one of a bandwidth, a transmission delay, or a packet loss rate.

In conclusion, in the link selection apparatus provided in this embodiment of this application, there are a plurality of links between the STA and the AP. The STA can select, for different service types, a proper link from the plurality of links for transmission of corresponding service data, and then the AP schedules a service of a corresponding service type on the link selected by the STA. In this way, different QoS guarantees are obtained for services of different service types, increasing service running reliability in the WLAN. In addition, the service type identity of the target service type is included in the link selection request sent by the AP to the STA, so that the AP triggers the STA to perform link selection for the target service type. The link identity of the recommended link is included in the link selection request, to indicate the STA to perform link selection on the recommended link or preferentially select the recommended link. This can improve link selection reliability, and further improve reliability of sending service data by the STA to the AP.

FIG. 11 is a schematic diagram of a structure of another link selection apparatus according to an embodiment of this application. The apparatus may be used in the AP 101 in the WLAN shown in FIG. 1. As shown in FIG. 11, the apparatus 110 includes:
a receiving module 1101, configured to receive a link selection indication sent by a STA, where the STA is associated with the AP, there are a plurality of links between the STA and the AP, the plurality of links are separately on a plurality of different channels, the link selection indication indicates a target link corresponding to a target service type, and the target link includes at least one of the plurality of links.

Optionally, still refer to FIG. 11. The apparatus 100 further includes a sending module 1102.

Optionally, the sending module 1102 is configured to send, on the target link, a scheduling frame to the STA.

Optionally, the scheduling frame includes an indication to the target service type.

Optionally, the sending module 1102 is configured to send a link selection request to the STA, where the link selection request requests the STA to send the link selection indication.

Optionally, the link selection request includes a service type identity of the target service type and/or a link identity of a recommended link.

Optionally, the link selection request is in a BSRP frame sent by the AP to the STA.

Optionally, the link selection indication is in a BSR field sent by the STA to the AP.

In conclusion, in the link selection apparatus provided in this embodiment of this application, there are a plurality of links between the STA and the AP. The STA can select, for different service types, a proper link from the plurality of links for transmission of corresponding service data, and then the AP schedules a service of a corresponding service type on the link selected by the STA. In this way, different QoS guarantees are obtained for services of different service types, increasing service running reliability in the WLAN. In addition, the service type identity of the target service type is included in the link selection request sent by the AP to the STA, so that the AP triggers the STA to perform link selection for the target service type. The link identity of the recommended link is included in the link selection request, to indicate the STA to perform link selection on the recommended link or preferentially select the recommended link. This can improve link selection reliability, and further improve reliability of sending service data by the STA to the AP.

For the apparatus in the foregoing embodiment, specific manners of executing operations by each module are described in detail in embodiments related to the method. Details are not described herein.

An embodiment of this application provides a STA, including a processor and a transceiver. The transceiver operates on a plurality of different channels. The transceiver is configured to perform receiving and sending actions on one or more channels under control of the processor, to implement actions performed by the STA in the foregoing method embodiments. Optionally, the transceiver includes a plurality of radio frequency circuits, and the plurality of radio frequency circuits separately operate on the plurality of different channels.

An embodiment of this application provides an AP, including a processor and a transceiver. The transceiver operates on a plurality of different channels. The transceiver is configured to perform receiving and sending actions on one or more channels under control of the processor, to implement actions performed by the AP in the foregoing method embodiments. Optionally, the transceiver includes a plurality of radio frequency circuits, and the plurality of radio frequency circuits separately operate on the plurality of different channels.

For example, FIG. 12 is a block diagram of a link selection apparatus according to an embodiment of this application. The apparatus may be a STA or an AP. As shown in FIG. 12, the apparatus 120 includes a processor 1201 and a transceiver 1202. The transceiver 1202 operates on a plurality of different channels.

The transceiver 1202 is configured to perform receiving and sending actions on one or more channels under control of the processor 1201, to implement actions performed by the AP or the STA in the foregoing method embodiments.

Optionally, the transceiver 1202 includes a plurality of radio frequency circuits, and the plurality of radio frequency circuits separately operate on the plurality of different channels. For example, refer to FIG. 2. A transceiver of the AP 101 includes the RFU 11 and the RFU 12, and the RFU 11 and the RFU 12 operate on different channels. A transceiver of the STA 102 includes the RFU 21 and the RFU 22, and the RFU 21 and the RFU 22 operate on different channels.

Optionally, the apparatus 120 further includes a memory 1203, a communication bus 1204, and a communication interface 1205.

The memory 1203 is configured to store a computer program, where the computer program includes program instructions.

The processor 1201 is configured to invoke the computer program stored in the memory 1203, to control the transceiver 1202 to perform receiving and sending actions. The processor 1201 includes one or more processing cores, and the processor 1201 executes various functional applications and performs data processing by running the computer program.

Optionally, the memory 1203 may store an operating system and an application program unit for at least one function. The operating system may be an operating system such as a real time operating system (Real Time executive, RTX), LINUX, UNIX, WINDOWS, or OS X.

There may be a plurality of communication interfaces 1205 for communication with another device. For example, in this embodiment of this application, the communication interface 1205 of the STA may be configured to send a link selection indication to the AP.

The transceiver 1202, the memory 1203, and the communication interface 1205 are both connected to the processor 1201 via the communication bus 1204.

An embodiment of this application further provides a computer-readable storage medium. The computer-readable storage medium stores instructions. When the instructions are executed by a processor of a computer device, actions performed by the AP or the STA in the foregoing method embodiments are implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. The term "at least one" refers to one or more, "at least one group" refers to one or more groups, and so on.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

The foregoing descriptions are only optional embodiments of this application, but are not intended to limit this application. Any modification, equivalent replacement, or improvement made within the concept and principle of this application should fall within the protection scope of this application.

## Claims

1. A link selection method, applicable to a wireless local area network, wherein the method comprises:
sending, by a station (STA), a link selection indication to an access point (AP), wherein the STA is associated with the AP, there are a plurality of links between the STA and the AP, the plurality of links are separately on a plurality of different channels, the link selection indication indicates a target link corresponding to a target service type, and the target link comprises at least one of the plurality of links.

2. The method according to claim 1, wherein after the STA sends the link selection indication to the AP, the method further comprises:
receiving, by the STA on the target link, a scheduling frame sent by the AP; and
sending, by the STA on the target link, service data of the target service type to the AP based on the scheduling frame.

3. The method according to claim 2, wherein the scheduling frame comprises an indication to the target service type.

4. The method according to any one of claims 1 to 3, wherein the method further comprises:
receiving, by the STA, a link selection request sent by the AP, wherein the link selection request requests the STA to send the link selection indication.

5. The method according to claim 4, wherein the link selection request comprises a service type identity of the target service type and/or a link identity of a recommended link.

6. The method according to claim 4 or 5, wherein the link selection request is in a buffer status report poll (BSRP) frame sent by the AP to the STA.

7. The method according to any one of claims 1 to 6, wherein the link selection indication is in a buffer status report (BSR) field sent by the STA to the AP.

8. The method according to any one of claims 1 to 7, wherein the target link is determined based on link quality information of the plurality of links and the target service type, and the link quality information comprises at least one of a bandwidth, a transmission delay, or a packet loss rate.

9. A link selection method, applicable to a wireless local area network, wherein the method comprises:
receiving, by an access point (AP), a link selection indication sent by a station (STA), wherein the STA is associated with the AP, there are a plurality of links between the STA and the AP, the plurality of links are separately on a plurality of different channels, the link selection indication indicates a target link corresponding to a target service type, and the target link comprises at least one of the plurality of links.

10. The method according to claim 9, wherein after the AP receives the link selection indication sent by the STA, the method further comprises:
sending, by the AP on the target link, a scheduling frame to the STA.

11. The method according to claim 10, wherein the scheduling frame comprises an indication to the target service type.

12. The method according to any one of claims 9 to 11, wherein the method further comprises:
sending, by the AP, a link selection request to the STA, wherein the link selection request requests the STA to send the link selection indication.

13. The method according to claim 12, wherein the link selection request comprises a service type identity of the target service type and/or a link identity of a recommended link.

14. The method according to claim 12 or 13, wherein the link selection request is in a buffer status report poll (BSRP) frame sent by the AP to the STA.

15. The method according to any one of claims 9 to 14, wherein the link selection indication is in a buffer status report (BSR) field sent by the STA to the AP.

16. A link selection apparatus, used in a station (STA) in a wireless local area network, wherein the apparatus comprises:
a sending module, configured to send a link selection indication to an access point (AP), wherein the STA is associated with the AP, there are a plurality of links between the STA and the AP, the plurality of links are separately on a plurality of different channels, the link selection indication indicates a target link corresponding to a target service type, and the target link comprises at least one of the plurality of links.

17. The apparatus according to claim 16, wherein the apparatus further comprises:
a receiving module, configured to receive, on the target link, a scheduling frame sent by the AP; and
the sending module is further configured to send service data of the target service type to the AP on the target link based on the scheduling frame.

18. The apparatus according to claim 17, wherein the scheduling frame comprises an indication to the target service type.

19. The apparatus according to any one of claims 16 to 18, wherein the apparatus further comprises:
the receiving module, configured to receive a link selection request sent by the AP, wherein the link selection request requests the STA to send the link selection indication.

20. The apparatus according to claim 19, wherein the link selection request comprises a service type identity of the target service type and/or a link identity of a recommended link.

21. The apparatus according to claim 19 or 20, wherein the link selection request is in a buffer status report poll (BSRP) frame sent by the AP to the STA.

22. The apparatus according to any one of claims 16 to 21, wherein the link selection indication is in a buffer status report (BSR) field sent by the STA to the AP.

23. The apparatus according to any one of claims 16 to 22, wherein the target link is determined based on link quality information of the plurality of links and the target service type, and the link quality information comprises at least one of a bandwidth, a transmission delay, or a packet loss rate.

24. A link selection apparatus, used in an access point (AP) in a wireless local area network, wherein the apparatus comprises:
a receiving module, configured to receive a link selection indication sent by a station (STA), wherein the STA is associated with the AP, there are a plurality of links between the STA and the AP, the plurality of links are separately on a plurality of different channels, the link selection indication indicates a target link corresponding to a target service type, and the target link comprises at least one of the plurality of links.

25. The apparatus according to claim 24, wherein the apparatus further comprises:
a sending module, configured to send, on the target link, a scheduling frame to the STA.

26. The apparatus according to claim 25, wherein the scheduling frame comprises an indication to the target service type.

27. The apparatus according to any one of claims 24 to 26, wherein the apparatus further comprises:
the sending module, configured to send a link selection request to the STA, wherein the link selection request requests the STA to send the link selection indication.

28. The apparatus according to claim 27, wherein the link selection request comprises a service type identity of the target service type and/or a link identity of a recommended link.

29. The apparatus according to claim 27 or 28, wherein the link selection request is in a buffer status report poll (BSRP) frame sent by the AP to the STA.

30. The apparatus according to any one of claims 24 to 29, wherein the link selection indication is in a buffer status report (BSR) field sent by the STA to the AP.

31. A station (STA), comprising a processor and a transceiver, wherein the transceiver operates on a plurality of different channels; and
the transceiver is configured to perform receiving and sending actions on one or more channels under control of the processor, to implement the link selection method according to any one of claims 1 to 8.

32. The STA according to claim 31, wherein the transceiver comprises a plurality of radio frequency circuits, and the plurality of radio frequency circuits separately operate on the plurality of different channels.

33. An access point (AP), comprising a processor and a transceiver, wherein the transceiver operates on a plurality of different channels; and
the transceiver is configured to perform receiving and sending actions on one or more channels under control of the processor, to implement the link selection method according to any one of claims 9 to 15.

34. The AP according to claim 33, wherein the transceiver comprises a plurality of radio frequency circuits, and the plurality of radio frequency circuits separately operate on the plurality of different channels.

35. A computer-readable storage medium, wherein the computer-readable storage medium stores instructions; and when the instructions are executed by a processor of a computer device, the link selection method according to any one of claims 1 to 15 is implemented.
